# EUROPÄISCHE PATENTANMELDUNG

(11) **EP 3 338 993 A1**
(43) Veröffentlichungstag der Anmeldung: **27.06.2018**
(21) Anmeldenummer: 17207460.1
(22) Anmeldetag: 14.12.2017
(51) Int. Cl.: B29C 47/00, E04F 15/10, B44C 5/04, B29C 47/06

(54) **VERFAHREN ZUR HERSTELLUNG EINES BEDRUCKTEN WPC-FORMTEILS**

(30) Priorität: 20.12.2016 DE 102016124893
(71) Anmelder: REHAU AG + Co, 95111 Rehau (DE)
(72) Erfinder: Al-Sheyyab, Ahmad, 95111 Rehau (DE); Schmidt, Steven, 95182 Döhlau (DE); Sell, Stephan, 39126 Magdeburg (DE); Weiss, Alexander, 2483 Ebreichsdorf (AT)

(57) **Zusammenfassung**

Die Erfindung betrifft ein Verfahren zur Herstellung eines WPC-Formteils (1), insbesondere eines WPC-Belagelementes. Zunächst wird - vorzugsweise mittels eines Extrusions- oder Spritzgussverfahrens - ein Kunststoff (200) und Holzpartikel (300) enthaltender WPC-Grundkörper (2) hergestellt und anschließend der WPC-Grundkörper (2), vorzugsweise mittels eines Digitaldruckverfahrens, bedruckt.

## Beschreibung

Die Erfindung betrifft ein Verfahren zur Herstellung eines WPC-Formteils, insbesondere eines WPC-Belagelementes. WPC-Formteile, insbesondere in Form von Extrusionsprofilen, sind im Stand der Technik hinlänglich bekannt, beispielsweise aus der EP 2 163 708 A2. WPC ist eine Abkürzung für den Begriff "Wood Plastic Composites", also ein Polymermaterial, welches mit Holzfasern vermischt, insbesondere mit Holzfasern gefüllt ist. Das Polymermaterial besteht meist aus einem Polyolefin (z.B. PE oder PP) oder PVC, ggf. ergänzt um anorganische Zuschlagstoffe. WPC-Material wird in großen Mengen produziert, wobei in vielen Fällen aus WPC-Material im Wege der Extrusion Profilkörper gefertigt werden, welche insbesondere als Komponenten für Bodenbeläge (Deckings) vorgesehen sind. Zur Herstellung des Bodenbelags wird eine Mehrzahl dieser Profilkörper nebeneinander angeordnet.

Die Oberfläche der vorbekannten WPC-Profile kann gebürstet und / oder geprägt werden, um das Design zu beeinflussen. Ferner sind Maßnahmen zur Reduzierung von Schimmelanfälligkeit, zur Erhöhung der UV-Bewitterungsstabilität sowie zur Verhinderung bzw. Reduzierung einer Vergrauung des Materials bekannt. Nachteilig im Stand der Technik sind die eingeschränkten Designmöglichkeiten, welche auf die o.g. Verfahren beschränkt sind. Die vorbekannten Profile können als Hohlkörper oder aber auch als Vollkörper bereitgestellt werden.

Vor dem beschriebenen Hintergrund liegt der Erfindung die Aufgabe zugrunde, ein Verfahren zur Herstellung eines WPC-Formteils, insbesondere eines WPC-Belags, anzugeben, welches die optischen Gestaltungsmöglichkeiten erweitert.

Erfindungsgemäß wird diese Aufgabe gelöst durch ein Verfahren zur Herstellung eines WPC-Formteils, insbesondere eines WPC-Belags, wobei zunächst - vorzugsweise mittels eines Extrusions- oder Spritzgussverfahrens - ein Kunststoff und Holzpartikel enthaltender WPC-Grundkörper hergestellt wird und wobei anschließend der WPC-Grundkörper, vorzugsweise mittels eines Digitaldruckverfahrens, bedruckt wird. Durch die, insbesondere digitale, Bedruckung des WPC-Grundkörpers ist es möglich, die Optik des WPC-Formteils ganz gezielt auf den entsprechenden Einsatzzweck abzustimmen. Das Digitaldruckverfahren ermöglicht hierbei höchstmögliche Flexibilität, insbesondere bei sehr kleinen Stückzahlen. Neben den bevorzugten Herstellverfahren Extrusion und Spritzguss für den WPC-Grundkörper liegen auch andere Verfahren im Rahmen der Erfindung, wie z.B. Doppelband-Verfahren. Zweckmäßigerweise werden mittels des Druckverfahrens mindestens 20 %, vorzugsweise mindestens 40 % der Sichtoberfläche des WPC-Grundkörpers bedruckt. Im Rahmen der Erfindung liegt es insbesondere, dass mindestens 50 %, vorzugsweise mindestens 60 % der Sichtoberfläche des WPC-Grundkörpers bedruckt werden. Sichtoberfläche meint hierbei insbesondere die nach einer Aneinanderreihung mehrerer WPC-Formteile zu einem Gesamtwerk, beispielsweise einem Boden- oder Wandbelag, sichtbare Oberfläche der einzelnen WPC-Formteile, wobei zweckmäßigerweise alle diese Einzeloberflächen zusammen genommen die Gesamtoberfläche des Belags bilden.

Andererseits liegt es auch im Rahmen der Erfindung, dass höchstens 80 % der Sichtoberfläche des WPC-Grundkörpers bedruckt werden, z.B. maximal 70 %. Insgesamt liegt auch eine Bedruckung von maximal 90 % der Sichtoberfläche des WPC-Grundkörpers im Rahmen der Erfindung. Hierbei kann insgesamt ausgenutzt werden, dass die optische Gestaltung von der Optik des WPC-Grundkörpers teilweise mitgeprägt wird und die Optik des Formteils durch die Bedruckung, vorzugsweise digitale Bedruckung wesentlich, aber eben nicht ausschließlich bestimmt wird.

Im Rahmen der Erfindung liegt es, dass auf die Bedruckung eine Schutzschicht aufgebracht wird. Hierbei kann es sich beispielsweise um eine Klarlackschicht handeln. Im Rahmen der Erfindung liegt es ferner, dass vor der Bedruckung auf den WPC-Grundkörper eine Haftvermittlerschicht aufgetragen wird. Diese Haftvermittlerschicht dient dazu, eine besonders gute Haftung der Bedruckung, vorzugsweise der digitalen Bedruckung auf der WPC-Oberfläche zu erreichen. Zweckmäßigerweise weist die Haftvermittlerschicht an ihrer der Bedruckung zugewandten Oberfläche eine Benetzungsspannung von mindestens 30 mN/m auf.

Im Rahmen der Erfindung liegt es hierbei insbesondere, dass die Haftvermittlerschicht als UV-härtbarer Isocyanat-Primer ausgebildet wird. Die Haftvermittlerschicht kann mit dem WPC-Grundkörper coextrudiert werden. Im Rahmen der Erfindung liegt es aber auch, dass die Haftvermittlerschicht aufgerollt, aufgespritzt oder auch aufgesprüht wird. Die der Bedruckung zugewandte Oberfläche des WPC-Grundkörpers wird vor dem Auftrag der Bedruckung, vorzugsweise vor dem Auftrag der Haftvermittlerschicht, mittels eines Vorbehandlungsprozesses aktiviert. Dies kann beispielsweise mit einer Flamme, mittels eines Korona-, eines Plasma- oder Laserverfahrens oder auch mittels eines Pyrosil-Verfahrens erfolgen.

Zweckmäßigerweise weist die Bedruckung metallische Pigmente auf, um eine Erwärmung des Formteils durch Sonnenlicht zu reduzieren. Im Rahmen der Erfindung liegt es insbesondere, dass spezielle Infrarotstrahlung-reflektierende Pigmente zur Reduzierung der Erwärmung des Formteils durch Sonnenlicht eingesetzt werden.

Wie bereits erläutert, erfolgt die Bedruckung der WPC-Oberfläche vorzugsweise mittels eines Digitaldruckverfahrens. Beim Digitaldruckverfahren wird zweckmäßigerweise ein Tintenstrahldruckverfahren eingesetzt, welches auf dem CMYK-Prinzip basiert. Der Farbaufbau erfolgt hierbei durch eine Kombination der Farben Cyan, Magenta, Yellow und Key (schwarz). Hiermit steht bei der digitalen Bedruckung mit einem Farbaufbau nach dem CMYK-Prinzip in der Regel gegenüber dem konventionellen Druckverfahren, wie z.B. dem Tiefdruckverfahren, nur eine einschränkte Farbauswahl zur Verfügung. Im Rahmen der Erfindung liegt es daher hierbei, die Bedruckung mehrschichtig aufzubauen und als Basisschicht eine Farbschicht vorzusehen, welche gegenüber der CMYK-Digitalbedruckung einen vergrößerten Farbraum aufweist. Dies bedeutet konkret, dass die Basisschicht eine Farbe aufweist, welche sich aus dem CMYK-Druck nicht zusammensetzen lässt, z.B. weiß oder eine von weiß verschiedene Farbe, beispielsweise einem hellen Cremefarbton.

Gegenstand der Erfindung ist ferner ein WPC-Formteil, welches mit einem der vorgenannten Verfahren hergestellt wird. Mehrere erfindungsgemäße WPC-Formteile können zu einem Belag, beispielsweise Boden- oder Wandbelag für Innen- und/oder Außenanwendungen, zusammengesetzt werden.

Im Folgenden wird die Erfindung anhand einer lediglich ein Ausführungsbeispiel darstellenden Zeichnung ausführlich erläutert. Es zeigen schematisch:
- Fig. 1:: einen Bodenbelag, welcher aus mehreren WPC-Formteilen zusammengesetzt ist in einer dreidimensionalen Darstellung;
- Fig. 2:: ein erfindungsgemäß hergestelltes einzelnes WPC-Formteil in einer Querschnittsdarstellung und
- Fig. 3:: das in Fig. 2 dargestellte WPC-Formteil in einer dreidimensionalen Darstellung.

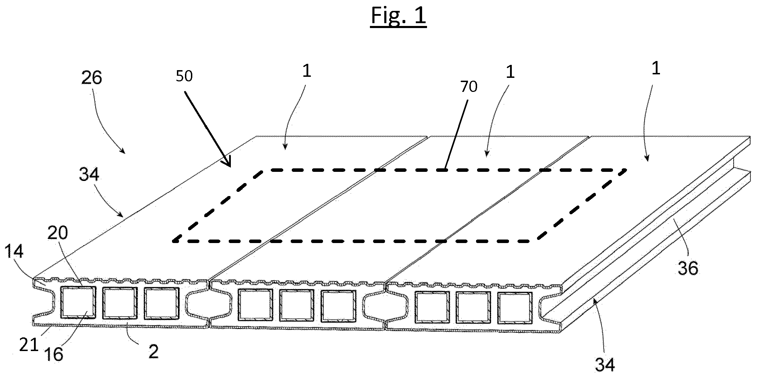

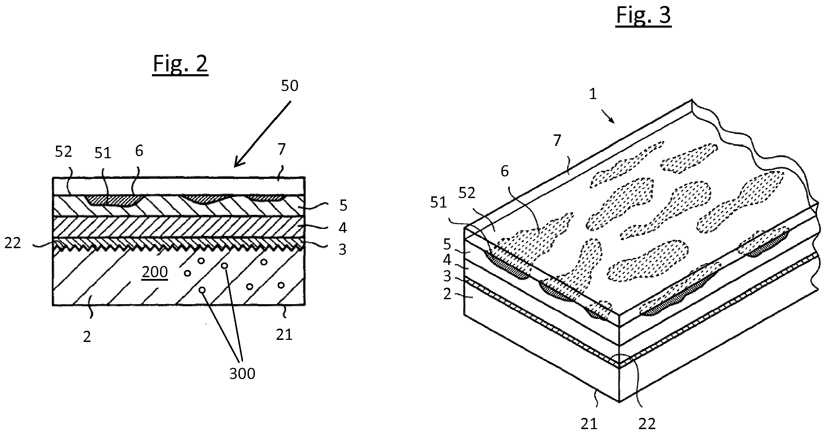

Die Fig. 1 zeigt ein mittels eines Extrusionsverfahrens hergestelltes WPC-Formteil 1 in Form eines WPC-Belagelementes, welches einen WPC-Grundkörper 2 aus einer Kunststoffmartix (z.B. PP-Matrix) 200 aufweist, die mit Holzpartikeln 300 gefüllt ist (in Fig. 2 angedeutet). In Fig. 1 sind mehrere dieser WPC-Belagelemente 1 aneinandergereiht und bilden insgesamt einen Bodenbelag 26, beispielsweise für Outdoor- und/oder Indoor-Anwendungen. Die WPC-Formteile 1 sind als Hohlkammerprofile mit jeweils mehreren Hohlkammern 16 ausgebildet und weisen eine strukturierte obere Belagoberfläche 50 auf. Erfindungsgemäß sind die WPC-Grundkörper 2 mittels eines Digitaldruckverfahrens bedruckt, wobei der Schichtaufbau hierzu im Detail in den Figuren 2 und 3 dargestellt ist. Mittels des Druckverfahrens wird den WPC-Belagelementen 1 ein Dekor verliehen, welches beispielsweise so groß ist, dass es sich über mehrere WPC-Belagelemente 1 hinweg erstreckt, z.B. ein großes Baum- oder Teppichdekor (angedeutet durch die gestrichelte Fläche 70 in Fig. 1), welches erst durch die Aneinanderreihung von mehreren WPC-Belagelementen 1 in seiner Gesamtheit für den Betrachter erkennbar ist. Dies bedeutet, dass in diesem Fall die einzelnen WPC-Belagelemente 1 unterschiedlich mit dem jeweiligen Teil des Gesamtdekors 70 bedruckt werden. Im Rahmen der Erfindung liegt es aber auch, dass die WPC-Belagelemente 1 identisch bedruckt werden und z.B. im Dekor eine Holzmaserung nachbilden. Die WPC-Belagelemente 1 weisen an ihren beiden Seitenrändern 34 jeweils eine Nut 36 auf, die beispielsweise über entsprechende, nicht dargestellte Vorrichtungen zur Verankerung der Elemente 1 am Boden genutzt werden können.

Anhand der Figuren 2 und 3 ist erkennbar, dass mittels des Druckverfahrens die gesamte Sichtoberfläche 50 des WPC-Grundkörpers 2 im Ausführungsbeispiel bedeckt wird. Im Rahmen der Erfindung liegt es jedoch auch, dass lediglich eine bereichsweise Bedruckung stattfindet, so dass beispielsweise 30 bis 80 % der Sichtoberfläche 22 des WPC-Grundkörpers 2 bedruckt werden. Gegenüber der Sichtoberfläche 22 liegt die unterseitige Oberfläche 21 des WPC-Grundkörpers 2, die dem Boden zugewandt ist. Es ist erkennbar, dass auf die Bedruckung 4, 5, 6 eine Schutzschicht 7 in Form einer Klarlackschicht aufgetragen ist. Ferner zeigen die Figuren 2 und 3, dass vor der Bedruckung 4, 5, 6 auf den WPC-Grundkörper 2 eine Haftvermittlerschicht 3 aufgetragen wird. Diese Haftvermittlerschicht 3 weist an ihrer der Bedruckung 4, 5, 6 zugewandten Oberfläche eine Benetzungsspannung von mindestens 30 mN / m auf. Im Ausführungsbeispiel ist die Haftvermittlerschicht 3 als UV-härtbarer Isocyanat-Primer ausgebildet. Ferner ist die Haftvermittlerschicht 3 im Ausführungsbeispiel mit dem WPC-Grundkörper 1 coextrudiert, wobei hierdurch alternative Auftragungsverfahren nicht ausgeschlossen werden.

Die der Bedruckung 4, 5, 6 zugewandte Sichtoberfläche 22 des WPC-Grundkörpers 2 wird vor dem Auftrag der Haftvermittlerschicht 3 mittels eines Vorbehandlungsprozesses, beispielsweise eines Korona-Verfahrens aktiviert. Mittels der Bedruckung 4, 5, 6 werden auf die Oberfläche des WPC-Formteils 1 auch (nicht dargestellte) metallische Pigmente aufgebracht, um eine Erwärmung des WPC-Formteils 1 durch Sonnenlicht zu reduzieren.

Wie anhand der Figuren 2 und 3 erkennbar ist, ist auch die Bedruckung 4, 5, 6 selbst mehrschichtig aufgebaut. Auf den Grundkörper 2 wird, wie bereits erläutert, zunächst die Haftvermittlerschicht 3 aufgetragen. Hieran schließt sich eine Grundierungsschicht 4 an, welche dem WPC-Grundkörper 2 eine farbliche Grundierung verleiht. Auf diese Grundierungsschicht 4 wird eine Basisschicht 5 aufgetragen, die im Ausführungsbeispiel Vertiefungen 51 und Erhebungen 52 aufweist. Hieran anschließend wird, z.B. mittels eines Tintenstrahl- oder Laserverfahrens, eine Digitaldruckschicht 6 aufgebracht, welche die Vertiefungen 51 der Basisschicht 5 ausfüllt. Darauf wird vollflächig die Klarlackschicht 7 aufgetragen. Als Klarlackschicht 7 wird ein transparenter oder transluzenter, vorzugswise UV-härtbarer Lack aufgetragen. Bei Einfärbung des Klarlacks kann die Klarlackschicht 7 einen Teil des sichtbaren Dekors des WPC-Formteils 1 bilden. Die Grundierungsschicht 4 und/oder die Basisschicht 5 kann digital, aber auch konventionell, z.B. mittels eines Tiefdruckverfahrens, aufgebracht werden. Die Basisschicht 5 weist eine gegenüber der digital aufgebrachten Digitaldruckschicht 6 einen vergrößerten Farbraum auf. Die Digitaldruckschicht 6 wird nach dem CMYK-Prinzip, z.B. mittels Tröpfchen, in den Farben Cyan, Magenta, Yellow und Key (schwarz) aufgebracht.

So kann beispielsweise insbesondere die Basisschicht 5 weiß gestaltet sein und als Grundlage zur Aufnahme der CMYK-Bedruckung dienen. Im Rahmen der Erfindung liegt es selbstverständlich auch, dass die Bedruckung einschichtig, insbesondere lediglich durch die Digitaldruckschicht 6, z.B. nach dem CMYK-Prinzip, erfolgt, bzw. lediglich die Digitaldruckschicht 6 auf die Basisschicht 5 aufgetragen wird, ohne dass zuvor eine Grundierungsschicht 4 aufgebracht wird.

## Patentansprüche

1. Verfahren zur Herstellung eines WPC-Formteils (1), insbesondere eines WPC-Belagelementes, wobei zunächst - vorzugsweise mittels eines Extrusions- oder Spritzgussverfahrens - ein Kunststoff (200) und Holzpartikel (300) enthaltender WPC-Grundkörper (2) hergestellt wird und wobei anschließend der WPC-Grundkörper (2), vorzugsweise mittels eines Digitaldruckverfahrens, bedruckt wird.

2. Verfahren nach Anspruch 1, wobei mittels des Druckverfahrens mindestens 20 %, vorzugweise mindestens 40 % der Sichtoberfläche (22) des WPC-Grundkörpers (2) bedruckt werden.

3. Verfahren nach Anspruch 1 oder 2, wobei mittels des Druckverfahrens höchstens 80 % der Sichtoberfläche des WPC-Grundkörpers (2) bedruckt werden.

4. Verfahren nach einem der Ansprüche 1 bis 3, **dadurch gekennzeichnet, dass** auf die Bedruckung (4, 5, 6) eine Schutzschicht (7) aufgebracht wird.

5. Verfahren nach einem der Ansprüche 1 bis 4, **dadurch gekennzeichnet, dass** vor der Bedruckung (4, 5, 6) auf den WPC-Grundkörper (2) eine Haftvermittlerschicht (3) aufgetragen wird.

6. Verfahren nach Anspruch 5, **dadurch gekennzeichnet, dass** die Haftvermittlerschicht (3) an ihrer der Bedruckung (4, 5, 6) zugewandten Oberfläche eine Benetzungsspannung von mindestens 30 mN/m aufweist.

7. Verfahren nach Anspruch 5 oder 6, **dadurch gekennzeichnet, dass** die Haftvermittlerschicht (3) als UV-härtbarer Isocyanat-Primer ausgebildet wird.

8. Verfahren nach einem der Ansprüche 5 bis 7, **dadurch gekennzeichnet, dass** die Haftvermittlerschicht (3) mit dem WPC-Grundkörper (2) coextrudiert wird.

9. Verfahren nach einem der Ansprüche 1 bis 8, **dadurch gekennzeichnet, dass** die der Bedruckung (4, 5, 6) zugewandte Sichtoberfläche (22) des WPC-Grundkörpers (2) vor dem Auftrag der Bedruckung (4, 5, 6), vorzugsweise vor dem Auftrag der Haftvermittlerschicht (3), mittels eines Vorbehandlungsprozesses aktiviert wird.

10. Verfahren nach einem der Ansprüche 1 bis 9, **dadurch gekennzeichnet, dass** die Bedruckung (4, 5, 6) metallische Pigmente aufweist, um eine Erwärmung des WPC-Formteils (1) durch Sonnenlicht zu reduzieren.

11. WPC-Formteil (1), hergestellt mit einem Verfahren nach einem der Ansprüche 1 bis 10.
